# EUROPÄISCHE PATENTANMELDUNG

(11) **EP 4 289 498 A1**
(43) Veröffentlichungstag der Anmeldung: **13.12.2023**
(21) Anmeldenummer: 22177910.1
(22) Anmeldetag: 08.06.2022
(51) Int. Cl.: B01D 53/14, B01D 53/22

(54) **VERFAHREN UND VORRICHTUNG ZUR AUFBEREITUNG VON METHANHALTIGEM GAS**

(71) Anmelder: Hitachi Zosen Inova AG, 8005 Zürich (CH)
(72) Erfinder: Jordan, Uwe, 27404 Zeven (DE); Mirdrikvand, Mojtaba, 27404 Zeven (DE); Hack, Gamuret, 8005 Zürich (CH)
(74) Vertreter: Schaad, Balass, Menzl & Partner AG

(57) **Zusammenfassung**

Die Erfindung betrifft ein Verfahren zur Aufbereitung von methanhaltigem Gas umfassend CO₂ sowie mindestens eine Verbindung aus der Gruppe der flüchtigen organischen Verbindungen (VOC), wobei letztere ausgewählt ist aus der Gruppe bestehend aus Ketonen, schwefelhaltigen Kohlenwasserstoffen und Terpenen und die VOC-Konzentration im Gasgemisch 10 - 10'000 ppm beträgt. Das methanhaltige Gasgemisch wird komprimiert und gekühlt und anschliessend einer Absorptionsvorrichtung zugeführt, wobei die Absorptionsvorrichtung ein flüssiges VOC-reversibelabsorbierendes Absorptions-mittel umfasst. In der Absorptionsvorrichtung wird ein Teil der VOC aus dem methanhaltigen Gasgemisch absorbiert, wodurch ein methanhaltiges, VOC-reduziertes Gasgemisch und ein mit VOC beladenes Absorptionsmittel erhalten wird. Anschliessend wird das VOC-beladene Absorptionsmittel aus der Absorptionsvorrichtung zu einer Desorptionsvorrichtung transportiert. Weiter wird das methanhaltige, VOC-reduzierte Gasgemisch aus der Absorptionsvorrichtung einer Trennvorrichtung zugeführt, in welcher CO₂ abgetrennt wird. In der Desorptions-vorrichtung wird ein Regenerationsgasstrom zur Regeneration des mit VOC beladenen Absorptionsmittels benutzt. Anschliessend wird der Abgasstrom aus der Desorptionsvorrichtung abgeführt und das zumindest teilweise regenerierte Absorptionsmittel aus der Desorptionsvorrichtung in die Absorptionsvorrichtung transportiert.

## Beschreibung

Die vorliegende Erfindung betrifft ein Verfahren zur Aufbereitung von methanhaltigem Gas gemäss Anspruch 1 sowie eine Vorrichtung zur Durchführung des besagten Verfahrens.

Angesichts der voranschreitenden Klimaerwärmung werden CO₂-neutrale Energieträger immer wichtiger für die heutige Gesellschaft. Ein bewährtes Verfahren zur Gewinnung eines solchen CO₂-neutralen Energieträgers ist die Vergärung von Lebensmittelabfällen in Fermentern zur Erzeugung von Biogas. Da Lebensmittel wie Früchte oder Gemüse während des Wachstums CO₂ aus der Atmosphäre binden, ist das bei der Vergärung dieser Lebensmittel entstehende Biogas und das darin enthaltene Methan CO₂-bzw. klimaneutral. Als Biogas wird in der vorliegenden Anmeldung ein methanhaltiges Gasgemisch natürlichen Ursprungs verstanden. Neben fermentativ erzeugtem Biogas, etwa aus Fermentern oder Deponien, kann Biogas auch nicht-fermentativen Ursprungs sein, beispielsweise in Form von Erdgas, Grubengas oder Flözgas.

Um solche methanhaltigen Gasgemische bzw. Biogase für die Energiegewinnung nutzbar zu machen, muss die Methankonzentration im Gasgemisch durch Entfernung oder zumindest Reduktion möglichst aller anderen Verbindungen (sog. Verunreinigungen) gesteigert werden. Aus diesem Grund wird insbesondere fermentativ erzeugtes Biogas für gewöhnlich aufgereinigt, um den Methangehalt zu erhöhen.

Für die Reinigung von Gasgemischen ist der Einsatz von geeigneten Adsorbern allgemein bekannt, etwa bei der industriellen Abgasreinigung oder auch in der Haustechnik, beispielsweise in Dunstabzugshauben. Durch Anlagerung an die innere Oberfläche poröser Adsorbermaterialien werden Luftschadstoffe, insbesondere Kohlenwasserstoffe, aus dem zu reinigenden Gasgemisch entfernt. Man kann Festbett-, Wanderbett-, Rotor-, Wirbelbett- und Flugstrom-Adsorber unterscheiden. In mehrstufigen Abgasreinigungsanlagen werden Adsorber oftmals auch als finale Reinigungsstufe, als sogenannte Polizeifilter, eingesetzt.

Heutzutage können Verunreinigungen in Biogasen mithilfe verschiedener biologischer, chemischer und physikalischer Prozesse abgetrennt werden, was generell als "(Bio-)Gasaufbereitung" bezeichnet wird und ein wichtiges Anwendungsgebiet der Gasreinigung darstellt. Verbindungen mit hohem Siedepunkt können etwa durch Adsorption, beispielsweise an einem Aktivkohlefilter, abgetrennt werden, während Verbindungen mit niedrigem Siedepunkt beispielsweise durch Kondensation und wasserlösliche Verbindungen mittels eines Wäschers entfernt werden können. Im Biogas üblicherweise enthaltene Verunreinigungen sind beispielsweise Kohlenstoffdioxid (CO₂), Schwefelwasserstoff (H₂S), Ammoniak (NH₃) und flüchtige organische Verbindungen (englisch: "volatile organic compounds", kurz VOC).

VOC ist eine Sammelbezeichnung für organische - also kohlenstoffhaltige Stoffe - die bei Raumtemperatur oder höheren Temperaturen durch Verdampfen (umgangssprachlich "Verdunsten") in die Gasphase übergehen, also flüchtig sind. Beispiele für VOC-Verbindungen sind Terpene, Ketone, Amine, Aldehyde, schwefelhaltige Kohlenwasserstoffe (S-KW) und weitere. Methan (CH₄) ist im Sinne der vorliegenden Anmeldung kein Bestandteil der Gruppe der VOC.

In der Abgasreinigung nimmt die Entfernung von VOC einen immer höheren Stellenwert ein, denn die Verminderung von VOC-Emissionen im Bereich Industrie und Gewerbe ist aus zweierlei Gründen wichtig: zum einen aus gesundheitlichen Aspekten, denn bei VOC in der Umgebungsluft können Menschen bestimmte Symptome wie Kopfschmerzen, Überempfindlichkeitsreaktionen, Müdigkeit, Leistungsminderung, Schlafstörungen und Reizungen der Atemwege entwickeln, welche auch unter dem Begriff "Sick-Building-Syndrom" zusammengefasst werden. Zum anderen kann das Vorhandensein von VOC in industriell genutzten Gasgemischen zu Ausfällen, Schäden und Effizienzminderungen in Aufbereitungs- oder Einspeiseanlagen führen, welche sich rasch finanziell auswirken. In Membrananlagen, welche zur Gasreinigung genutzt werden, kann die Filterkapazität durch kondensierte Terpene beeinträchtigt werden, während Ketone die Dichtungen beschädigen, wodurch die Wartungsintervalle kürzer werden und die Membranen früher und öfters ersetzt werden müssen. Deshalb wurden sowohl im Bereich der Abluftreinigung als auch in der Biogasaufbereitung spezielle Verfahren entwickelt, um VOC frühzeitig aus Gasgemischen abzutrennen.

Die US 2019/0001263 A1 offenbart ein Verfahren zur Entfernung von CO₂, O₂, N₂ und VOC aus Biogas. In einem ersten Schritt wird das Gas komprimiert und anschliessend werden nacheinander mittels eines ersten Adsorbers (bevorzugt eine Druck-Temperaturwechsel-Absorptionsvorrichtung, englisch "pressure temperature swing absorption", kurz "PTSA") die VOC entfernt. Anschliessend wird mittels einer cryogenen Membran das CO₂ entfernt und abschliessend mittels eines zweiten Adsorbers (bevorzugt eine PTSA) O₂ und N₂ abgetrennt, um gereinigtes Biogas zu erhalten. Dieses Verfahren ist mit drei separaten Trennmitteln (zwei PTSA und eine Membran) relativ aufwendig und daher kosten- und wartungs-intensiv. Insbesondere die zwei parallellaufenden PTSA müssen zur Regeneration des Adsorptionsmediums erwärmt und anschliessend wieder auf Betriebstemperatur runtergekühlt werden, um ein kontinuierliches Verfahren zu gewährleisten.

Der vorliegenden Erfindung stellt sich daher die Aufgabe, die oben beschriebenen Nachteile des Stands der Technik zu beseitigen und ein verbessertes Verfahren zur Entfernung von Verunreinigungen, insbesondere CO₂ und VOC, aus einem methanhaltigen Gasgemisch bereitzustellen, das eine effiziente und effektive Reduktion des Gehalts an CO₂ und VOC erlaubt.

Die Aufgabe wird erfindungsgemäss mit einem Verfahren gemäss Anspruch 1 und einer Vorrichtung gemäss Anspruch 15 gelöst. Bevorzugte Ausführungsformen der Erfindung sind in den abhängigen Ansprüchen wiedergegeben.

Im erfindungsgemässen Verfahren wird in einem ersten Schritt a) ein methanhaltiges Gasgemisch umfassend CO₂ sowie mindestens eine Verbindung aus der Gruppe der flüchtigen organischen Verbindungen (VOC) bereitgestellt. Nachfolgend wird anstatt des Begriffs "Verbindung aus der Gruppe der flüchtigen organischen Verbindungen (VOC)" wahlweise auch der Begriff "VOC-Verbindung" verwendet. Die mindestens eine VOC-Verbindung ist erfindungsgemäss ausgewählt aus der Gruppe bestehend aus Ketonen, schwefelhaltigen Kohlenwasserstoffen und Terpenen. Weiter beträgt erfindungsgemäss die VOC-Konzentration im methanhaltigen Gasgemisch 10 - 10'000 ppm. In einem zweiten Schritt b) wird das methanhaltige Gasgemisch komprimiert und gekühlt. In einem dritten Schritt c) wird das komprimierte, gekühlte methanhaltige Gasgemisch einer Absorptionsvorrichtung zugeführt, wobei die Absorptionsvorrichtung ein flüssiges VOC-reversibelabsorbierendes Absorptionsmittel umfasst. In einem vierten Schritt d) wird in der Absorptionsvorrichtung zumindest ein Teil der VOC aus dem methanhaltigen Gasgemisch absorbiert, wodurch ein methanhaltiges, VOC-reduziertes Gasgemisch und ein VOC-beladenes Absorptionsmittel erhalten wird. In einem fünften Schritt e) wird das VOC-beladene Absorptionsmittel aus der Absorptionsvorrichtung einer Desorptionsvorrichtung zugeführt. In einem sechsten Schritt f) wird das methanhaltige, VOC-reduzierte Gasgemisch aus der Absorptionsvorrichtung einer Trennvorrichtung zugeführt, in welcher das methanhaltige, VOC-reduzierte Gasgemisch in einen druckreduzierten, mit CO₂ angereichten Gasstrom und einen isobaren methanangereicherten Gasstrom aufgetrennt wird. In einem siebten Schritt g) wird der Desorptionsvorrichtung ein Regenerationsgasstrom zur Regeneration des VOC-beladenen Absorptionsmittels zugeführt, wodurch ein Abgasstrom enthaltend die mindestens eine VOC-Verbindung sowie ein zumindest teilweise regeneriertes Absorptionsmittel erhalten wird. In einem achten Schritt h) wird der Abgasstrom aus dem siebten Schritt aus der Desorptionsvorrichtung abgeführt und das zumindest teilweise regenerierte Absorptionsmittel aus der Desorptionsvorrichtung der Absorptionsvorrichtung zugeführt.

Im Sinne der Erfindung wird unter dem Begriff «flüssig» ein unter Normalbedingungen, also bei 1 bar Umgebungsdruck und 20°C, flüssiger Aggregatszustand verstanden.

Im Sinne der Erfindung wird unter dem Begriff «reversibel absorbierend» eine reversible Wechselwirkung zwischen einem Absorptionsmittel und einer zu absorbierenden Verbindung verstanden, wonach besagte Verbindung reversibel an das Absorptionsmittel bindet und von diesem auch wieder gelöst werden kann.

Im Sinne der Erfindung wird unter dem Begriff «Absorptionsmittel» ein Material verstanden, welches eine zu absorbierende Verbindung zumindest temporär binden kann.

Bevorzugt wird im erfindungsgemässen Verfahren ein tropffähiges Absorptionsmittel verwendet, also ein Absorptionsmittel, das zur Tropfenbildung bzw. zur Bildung von kleinen flüssigen Tropfen fähig ist. Beispielsweise wird für Wasser ein Tropfenvolumen (d.h. das Volumen eines typischen Tropfens) von ungefähr 50 µl angenommen. Dem Fachmann ist klar, dass für jedes Absorptionsmittel das Tropfenvolumen individuell bestimmt werden muss. Das Beispiel von Wasser dient hier lediglich zur Orientierung. Die Bildung von Tropfen erhöht die Oberfläche des Absorptionsmittels, was wiederum dessen Wirkungsgrad erhöht. Bevorzugt wird zur Erzeugung von Tropfen ein handelsüblicher Flüssigkeitsverteiler verwendet. Weiter können bevorzugt auch Füllkörper oder strukturierte Packungen verwendet werden, um die Oberfläche des Absorptionsmittels zu vergrössern. Dabei wird das Design der Absorptionsvorrichtung so gewählt, dass man unterhalb des Flutpunktes einer Packung, bzw. eines Absorptionsmittels arbeitet, um zu verhindern, dass dieses durch den Gasstrom aus der Absorptionsvorrichtung gedrückt wird.

Im Sinne der Erfindung wird unter dem Begriff «druckreduziert» verstanden, dass der Druck eines Gases verringert wird, beispielsweise indem ein Gas entspannt wird.

Weiter wird im Sinne der Erfindung unter dem Begriff «isobar» verstanden, dass sich die Druckverhältnisse nicht oder nur unwesentlich verändern. Als unwesentlich Veränderung wird dabei eine Veränderung von bis zu ± 5% angesehen.

Auch wenn die Schritte im erfindungsgemässen Verfahren nummeriert sind, ist dem Fachmann ist klar, dass gewisse Schritte auch parallel ablaufen können. Beispielsweise können die Schritte e) und f) parallel stattfinden.

Das erfindungsgemässe Verfahren hat gegenüber bekannten Verfahren aus dem Stand der Technik den Vorteil, dass durch die örtliche Trennung der Absorption und Desorption von VOC die Vorrichtungen - insbesondere die Behälter in den Vorrichtungen, in welchen die oben genannte Absorption und Desorption stattfindet - keiner wechselnden Belastung ausgesetzt sind und somit deren Lebenszeit verlängert wird.

Das Austauschen des gesättigten Absorptionsmittels durch nicht gesättigtes Absorptionsmittel benötigt nur wenig Zeit und ermöglicht ein kontinuierliches Aufreinigen des methanhaltigen Gasgemischs. Weiter werden durch das erfindungsgemässe Verfahren die Herstellungskosten für gereinigtes Biogas gesenkt, da das Verfahren lediglich eine Absorptionsvorrichtung benötigt, welche zudem noch günstiger betrieben werden kann.

Ein weiterer Vorteil des erfindungsgemässen Verfahrens gegenüber dem Stand der Technik besteht darin, dass ein flüssiges Absorptionsmittel verwendet wird. Dieses kann daher von einem ersten in einen zweiten Behälter gepumpt werden und ist einfacher zu handhaben, als die im Stand der Technik offenbarten Adsorptionsmittel welche üblicherweise als Schüttgut vorliegen.

In einer bevorzugten Ausführungsform erfolgen zumindest die Schritte f) und h), besonders bevorzugt die Schritte c) bis h), kontinuierlich. Dies hat den Vorteil, dass das Verfahren zur Aufbereitung von methanhaltigem Gas effizienter und wirtschaftlicher betrieben werden kann, als wenn das Gas nur «Batch-weise» aufbereitet wird. Weiter ist der kontinuierliche Betrieb im Gegensatz zu der im Stand der Technik normalerweise vorgeschlagenen zyklischen Umschaltung weniger fehleranfällig, da keine fehleranfälligen Armaturen zur Überwachung der Umschaltung benötigt werden.

Bevorzugt wird in Schritt g) zumindest ein Teil des mit CO₂ angereicherten Gasstroms aus Schritt f) als Regenerationsgasstrom verwendet, wodurch der Abgasstrom neben der VOC-Verbindung ferner CO₂ enthält.

Die Rückführung des abgetrennten CO₂-angereicherten Gasstroms führt zu tieferen Produktionskosten, da nicht ein separates Regenerationsgas bereitgestellt werden muss, welches fortwährend verbraucht wird.

In einer bevorzugten Ausführungsform werden in Schritt c) in der Absorptionsvorrichtung 2 bis 10 Liter Absorptionsmittel pro Bm³ methanhaltiges Gasgemisch aus Schritt b) verwendet.

Die Einheit Bm³, welche für Betriebskubikmeter steht, definiert im Sinne der Anmeldung das im Betriebszustand vorliegende tatsächliche Volumen des Gases. Das Betriebsvolumen des Gases kann in erster Näherung mit ausreichender Genauigkeit mithilfe der idealen Gasgleichung ermittelt werden.

Bevorzugt werden in Schritt g) in der Desorptionsvorrichtung 1 bis 3 Liter von VOC beladenem Absorptionsmittel aus Schritt d) mit 1 Bm³ von CO₂ angereichtem Gas aus Schritt f) regeneriert.

In einer bevorzugten Ausführungsform hat das VOCadsorbierende Absorptionsmittel einen Siedepunkt von >250°C bei 1013,25 mbar und umfasst eine Verbindung ausgewählt aus der Gruppe bestehend aus Polyethylenglycol (PEG), Mineralöl, Estern oder Kombinationen davon, wobei Polyethylenglycol besonders bevorzugt ist.

Absorptionsmittel mit den oben genannten Eigenschaften eignen sich besonders gut für das erfindungsgemässe Verfahren, da sie VOC effizient absorbieren und desorbieren - und zwar unter klar voneinander getrennten Bedingungen, ohne dass diese Bedingungen besonders aufwendig zu erreichen sind. Das heisst, dass mit diesen Absorptionsmitteln ein günstiges und effizientes Aufbereitungsverfahren gewährleistet werden kann.

Bevorzugt umfasst das VOC-reversibel-absorbierende Absorptionsmittel eine Verbindung gemäss der Formel (I):
I)

   R₁-O-(CH₂CH₂O)ₙ-R₂,

   wobei n = 3 bis 8 und
   R₁ und R₂ unabhängig voneinander ausgewählte lineare C₁ - C₁₀ Alkyle sind.

Basierend auf der Formel (I) ist das VOC-reversibel-absorbierende Absorptionsmittel besonders bevorzugt eine Verbindung (Ia) mit

R₁-O-(CH₂CH₂O)ₙ-R₂,

wobei n = 11 und R₁ und R₂ = CH₃ sind.

Die bevorzugte Verbindung (Ia) ist also

CH₃-O-(CH₂CH₂O)₁₁-CH₃.

Ein weiteres bevorzugtes Absorptionsmittel ist unter dem Namen Genosorb 300 mit der CAS-Nr. 24991-55-7 bekannt.

Es hat sich überraschenderweise gezeigt, dass sich die Absorptionsmittel gemäss der Formel (I) aus den vorstehend genannten Gründen besonders gut für das erfindungsgemässe Verfahren eignen.

Ein weiteres bevorzugtes Absorptionsmittel ist das stabilisierte Reaktionsprodukt aus 5,8,11,14-Tetraoxaoctadecane und 5,8,11,14,17-Pentaoxaheneicosane - auch als Genosorb 1843 bekannt.

In einer bevorzugten Ausführungsform weist die mindestens eine VOC-Verbindung einen Dampfdruck von mindestens 0,1 mbar bei 20 °C und/oder einen Siedepunkt von höchstens 240 °C bei 1013,25 mbar auf.

In einer bevorzugten Ausführungsform ist die mindestens eine VOC-Verbindung ausgewählt aus der Gruppe bestehend aus Aceton, 2-Butanon, 3-Methyl-2-butanon, 2-Pentanon, 3-Pentanon, 3,3-Dimethyl-2-butanon, 2-Methyl-3-pentanon, 4-Methyl-2-pentanon, 3-Methyl-2-pentanon, 3-Hexanon, 2-Hexanon, 5-Methyl-3-hexanon, 3-Methyl-2-hexanon, 2-Heptanon, 4-Octanon, 3-Octanon, 2-Octanon, 2,9-Decandion, α-Thujen, α-Pinen, Camphen, Sabinen, β-Pinen, Myrcen, 3-Caren, Thujanon, Thujopsen, Thymol, α-Terpinen, β-Caryophyllen, 1,4-Cineol, Eucalyptol, Fenchon, γ-Terpinen, Terpinolen, Limonen, Tricyclen, Linalool, Menthon, Nopinon, p-Menthan-2-on, p-Menthan-2-ol, Campher, Carvomenthon, 3,3-Dimethyl-2-bornanon, Carbonylsulfid, Methylmercaptan, Ethylmercaptan, Dimethylsulfid, Kohlenstoffdisulfid, 2-Propanthiol, 2-Methyl-2-propanthiol, 1-Propanthiol, Thiophen, 2-Butanthiol, Isobutylmercaptan, Methyl-Allyl-Sulfid, Methylpropylsulfid, Butanthiol, Dimethyldisulfid, 2-Methylthiophen, 3-Methylthiophen, Tetrahydrothiophen, 1-Pentanthiol, Thiophenol, Dimethyltrisulfid, Diisopropyldisulfid, Dimethyltetrasulfid, Methylpropyldisulfid und Methylisopropyldisulfid. Es versteht sich, dass auch Mischungen von den genannten Verbindungen verwendet werden können.

Es hat sich gezeigt, dass das erfindungsgemässe Verfahren sich auch zur Aufbereitung eines Gasgemisches umfassend von mindestens zwei VOC-Verbindungen eignet. Bevorzugt umfasst das Gasgemisch entsprechend mindestens eine weitere VOC-Verbindung ausgewählt aus der Gruppe bestehend aus Aldehyden, Alkohole, Amine, BTEX, Ester, Ether, FCKW, und Siloxane.

In einer bevorzugten Ausführungsform ist die mindestens eine weitere VOC-Verbindung ausgewählt aus der Gruppe bestehend aus linearen oder verzweigten C₁ - C₅ Alkoholen, Sulfiden und ungesättigten Terpenen.

Bevorzugt ist die mindestens eine weitere VOC-Verbindung ausgewählt aus der Gruppe bestehend aus 2-Methylbutyraldehyd, Acetaldehyd, Decanal, Formaldehyd, Hexanal, iso-Butyraldehyd, iso-Pentanal, n-Butyraldehyd, Propylaldehyd, 1-Butanol, 1-Propanol, 2-Butanol, 2-Ethylhexanol, 2-Methyl-1-butanol, 2-Methyl-1-propanol, 2-Methyl-2-butanol, 2-Methyl-3-pentanol, 3-Methyl-1-butanol, 3-Pentanol, Ethanol, Isopropanol, Methanol, 4,4-Dimethyloxazolidin, 1,4-Dimethylpiperazin, 1-Methylpiperazin, 1-Methylpyrrol, 4-Methylpiperazin-1-ethanol, Dimethylaminoethanol, Dimethylpiperazin, Methyldiethanolamin, N-Aminoethanol-Piperazin, Piperazin, Pyridin, 1,2,3-Trimethylbenzol, 1,2,4-Trimethylbenzol, 1,3,5-Trimethylbenzol, Benzol, Ethylbenzol, Ethyltoluol, m-Xylol, o-Xylol, Propylbenzen, p-Xylol, Styrol, Toluol, 6,6-Dimethyl-tetrahydropyran-2-one, Buttersäureethylester, Buttersäuremethylester, Buttersäurepropylester, Dimethylcarbonat, Ethylacetat, Heptansäureethylester, Hexansäuremethylester, Isobuttersäureethylester, Isobuttersäuremethylester, Isopropylacetat, Methylacetat, Methylformiat, n-Butylacetat, n-Propylacetat, n-Propylpropionat, Pentansäureethylester, Pentansäuremethylester, Propionsäureethylester, Propionsäuremethylester, sek. Butylacetat, 1,3-Dioxan, 1,3-Dioxolan, 2,4,5-Trimethyl-1,3-dioxolane, 2-Butylfuran, 2-Ethyl-2-methyl-1,3-dioxolan, 2-Ethyl-4-methyl-1,3-dioxolan, 2-Ethyl-5-methylfuran, 2-Ethylfuran, 5,6-Dihydro-2-methyl-2H-Pyran, 2-Methylfuran, 2-Propylfuran, 3-Methylfuran, Diethylether, Dimethylfuran, Methyl-1,3-Dioxan, Pentylfuran, Tetrahydrofuran, Trimethyldioxolan, 1,1,2,2-Tetrachloroethan, 1,1,2-Trichloroethan, 1,2-Dibromethan, 1,2-Dichlorbenzol, 1,2-Dichlorethan, 1,2-Dichlorpropan, 1,3-Dichlorbenzol, 1,4-Dichlorbenzol, Benzylchlorid, Chlorethan, Chlormethan, Chloroform, Dichlormethan, Tetrachlorethen, Trichlorfluormethan, Trichlorfluormethan, Vinylchlorid, 2,3-Butandion, 2,4-Dimethylpentan-3-on, 2-Methylhexan-3-one, 3,3-Dimethyl-2-butanon, 3-Ethylcyclopentanone, 3-Heptanon, 4-Ethylcyclohexanon, 4-methylhexan-3-one, 6-Methylheptan-2-one, Cyclohexanon, Cyclopentanon, 2-methyl-Cyclopentanone, 3-methyl-Cyclopentanone, Hydroxybutanon, 1,4-Pentadien, 2-Methyl-1-buten, 1,1-Dimethylcyclopropan, 1,3-Butadien, 1-Nonen, 1-Octen, 1-Penten, 2,2,4-Trimethylpentan, 2,2-Dimethylbutan, 2,3-Dimethyloctan, 2,4-Hexadien, 2,6-Dimethyloctan, 2-Methyl-2-buten, 2-Methylbutan, 2-Methylhexan, 2-Methylpentan, 2-Nonen, 2-Octen, 3-Methyl-1-buten, 3-Methylhexan, 3-Methyloctan, 3-Methylpentan, 4-Methyloctan, 4-Octen, Butan, Buten, Cumol, Cyclohexan, Cyclopenten, trans-1,2-Dimethylcyclopropane, Decan, Dimethylocten, Heptan, Hexan, Isobutan, Methylcyclohexan, Methylcyclohexen, Methylcyclopentan, Naphthalin, n-Dodecan, Nonan, Nonen, n-Tetradecan, n-Tetradecan, n-Tridecan, n-Tridecan, Octan, Pentan, Propan, Propen, Tetramethylbenzol, Undecan, Decamethylcyclopentasiloxan, Decamethyltetrasiloxan, Dodecamethylcyclohexasiloxan, Dodecamethylpentasiloxan, Ethoxytrimethylsilan, Fluortrimethylsilan, Hexamethylcyclotrisiloxan, Hexamethyldisiloxan, Hydroxytrimethylsilan, Octamethylcyclotetrasiloxan, Octamethyltrisiloxan, 1-Ethyl-1H-pyrrole, Acetonitril, Isobuttersäure, Methylpropannitril, 1-(Methylthio)-1-propene, 2-Ethyl-5-methylthiazole, 2-Ethylthiophene, 2-Propylthiophen, 3-Pentanethiol, Dipropyldisulfid, Dipropyltrisulfid, Methylethyldisulfid, Methylpropyldisulfid, Methylthiirane, Methylthiopropane, 1-(Methylthio)-pentane, sec. Butylpropyldisulfid, 2,6-Dimethyl-2,6-octadien, 2,6-Dimethyl-4-octen, 2-Caren, 3,3,5-Trimethyl-1,5-heptadien, 3,6,6-Trimethylbicyclo-[3.1.1]-heptan-2-on, 3,7-Dimethyl-2,4-octadien, Alloaromadendren, α-Phellandren, α-Terpineol, α-Copaen, α-Cubeben, α-Gurjunen, α-Pinocarvone, α-Terpineolacetat, β-Elemen, Caran, Dihydromyrcen, Dihydroumbellulon, Isomenthol, Myrtanol, p,α,α-Trimethylbenzylalkohiol, p-Cymene, Phellandren, Pinocamphon, p-Menth-3-en, Terpinen-4-ol, α-Caryophyllen und γ-Cadinen.

In einer bevorzugten Ausführungsform umfasst die Trennvorrichtung eine Membran, welche das methanhaltige, VOC-reduzierte Gasgemisch in ein CO₂-angereichtes Permeat und ein methanangereichertes Retentat auftrennt. Die Verwendung einer Membran hat den Vorteil, dass die Abtrennung von CO₂ kontinuierlich erfolgen kann und die Membran im Gegensatz zu anderen Trennvorrichtungen wie beispielsweise einer PTSA weniger aufwändig im Unterhalt ist.

Bevorzugt wird das methanhaltige Gasgemisch in Schritt b) auf 6 bis 24 bar (g), bevorzugt 10 bis 20 bar (g), und besonders bevorzugt auf 14 bis 18 bar (g), komprimiert, da bei diesen Druckbereichen VOC besonders effizient aus dem Biogas entfernt werden können.

In einer bevorzugten Ausführungsform wird das methanhaltige Gasgemisch in Schritt b) auf 0°C bis 20°C, bevorzugt auf 2°C bis 10°C, gekühlt, da bei diesen Temperaturbereichen die VOC effizient vom Absorptionsmittel absorbiert werden.

In einer bevorzugten Ausführungsform wird der Abgasstrom aus Schritt g) einer regenerativen Nachverbrennungsvorrichtung zugeführt, um die Umweltbelastung des Verfahrens zu reduzieren.

Bevorzugt wird das VOC-beladene Absorptionsmittel aus Schritt d) vor dem Transport in die Desorptionsvorrichtung auf 30°C bis 90°C, besonders bevorzugt auf 50°C bis 70°C, erwärmt. Durch die Erwärmung des Absorptionsmittels kann dieses in der Desorptionsvorrichtung einfacher und effizienter regeneriert werden.

In einer bevorzugten Ausführungsform wird das regenerierte Absorptionsmittel aus Schritt g) vor seiner Rückführung in die Absorptionsvorrichtung gekühlt, bevorzugt auf 0°C bis 20°C, besonders bevorzugt auf 2°C bis 10°C.

Ein weiterer Aspekt der Erfindung betrifft eine Vorrichtung zur Aufbereitung von methanhaltigem Gas gemäss dem erfindungsgemässen Verfahren. Besagte Vorrichtung umfasst folgende Komponenten:
eine Gasquelle,
eine Kühlvorrichtung ,
einen Kompressor,
eine Absorptionsvorrichtung mit einem oberen Ende und einem unteren Ende,
eine Desorptionsvorrichtung mit einem oberen Ende und einem unteren Ende,
eine Trennvorrichtung,
eine erste Verbindungsleitung, welche das untere Ende Desorptionsvorrichtung mit dem oberen Ende der Absorptionsvorrichtung verbindet,
eine zweite Verbindungsleitung, welche das untere Ende der Absorptionsvorrichtung mit dem oberen Ende der Desorptionsvorrichtung verbindet,
eine dritte Verbindungsleitung, welche das obere Ende der Absorptionsvorrichtung mit der Trennvorrichtung verbindet,
eine vierte Verbindungsleitung, welche die Trennvorrichtung mit dem unteren Ende der Desorptionsvorrichtung verbindet.

Im Folgenden wird die Erfindung anhand der beigefügt dargestellten Ausführungsbeispiele näher erläutert. Es zeigen rein schematisch:
- Fig. 1: eine schematische Darstellung einer bevorzugten Ausführungsform des erfindungsgemässen Verfahrens zur Aufreinigung von methanhaltigem Gas;
- Fig. 2: den Aufbau eines in silico Simulationsmodells;
- Fig. 3: ein Stufendiagramm für die VOC Verbindung Methylmercaptan;
- Fig. 4: ein Stufendiagramm für die VOC Verbindung Dimethylsulfid;
- Fig. 5: ein Stufendiagramm für die VOC Verbindung Aceton;
- Fig. 6: ein Stufendiagramm für die VOC Verbindung 2-Butanon;
- Fig. 7: ein Stufendiagramm für die VOC Verbindung 1-Propanol;
- Fig. 8: ein Stufendiagramm für die VOC Verbindung Toluol;
- Fig. 9: ein Stufendiagramm für die VOC Verbindung Limonen;
- Fig. 10: ein Diagramm von gemessenen VOC Konzentrationen in Anlagen, die Biogas aus nachwachsenden Rohstoffen erzeugen; und
- Fig. 11: ein Diagramm von gemessenen VOC Konzentrationen in Anlagen, die Biogas aus Abfall erzeugen.

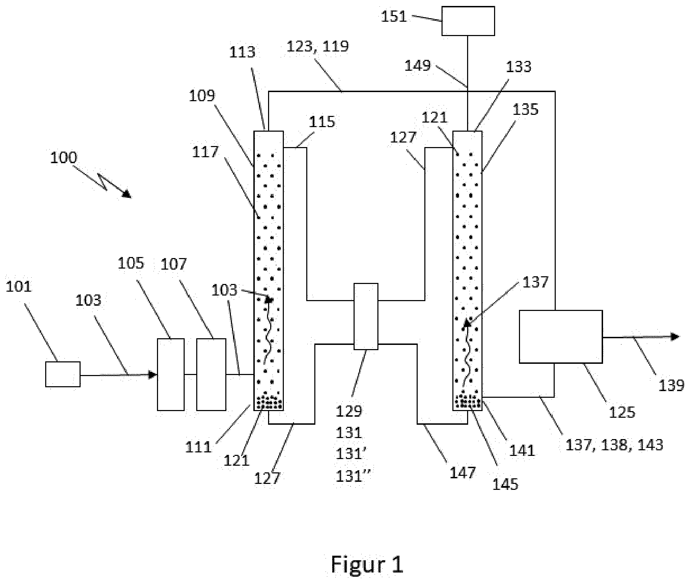

Bei der in Fig. 1 schematisch dargestellten bevorzugten Ausführungsform des erfindungsgemässen Verfahrens wird in einem ersten Schritt ein methanhaltiges Gasgemisch aus einer Gasquelle 101 bereitgestellt. Das Gasgemisch 103 umfasst CO₂ sowie mindestens eine Verbindung aus der Gruppe der flüchtigen organischen Verbindungen (VOC). Das methanhaltige Gasgemisch 103 wird in einem Kompressor 105 auf 14 - 18 bar (g) komprimiert und anschliessend in einer Kühlvorrichtung 107 auf 2 - 10 °C gekühlt.

Anschliessend wird das methanhaltige Gasgemisch 103 einer Absorptionsvorrichtung 109 zugeführt. Das methanhaltige Gasgemisch 103 wird dabei an einem unteren Ende 111 der Absorptionsvorrichtung 109 eingeleitet und steigt nach oben zu einem oberen Ende 113 der Absorptionsvorrichtung 109.

Die Begriffe "oben" und "unten" beziehen sich auf die in den Figuren gezeigten Orientierung der jeweiligen Vorrichtungen.

Weiter wird der Absorptionsvorrichtung 109 über eine erste Verbindungsleitung 115, welche im Bereich des oberen Endes 113 in die Absorptionsvorrichtung 109 mündet, ein flüssiges Absorptionsmittel 117 zugeführt. Dieses flüssige Absorptionsmittel 117 strömt in Tropfenform vom oberen Ende 113 zum unteren Ende 111 der Absorptionsvorrichtung 109 und kommt dabei in Kontakt mit dem entgegenströmenden methanhaltigem Gasgemisch 103. Durch den Kontakt des Absorptionsmittels 117 mit dem methanhaltigen Gasgemisch 103 werden die im Gasgemisch enthaltenen VOC reversibel im Absorptionsmittel 117 gebunden, wodurch am oberen Ende 113 der Absorptionsvorrichtung 109 ein methanhaltiges, VOC-reduziertes Gasgemisch 119 erhalten wird, während sich am unteren Ende 111 der Absorptionsvorrichtung 109 ein VOC-beladenes Absorptionsmittel 121 sammelt. Das methanhaltige, VOC-reduzierte Gasgemisch 119 wird über eine zweite Verbindungsleitung 123 ausgehend vom oberen Ende 113 der Absorptionsvorrichtung 109 zu einer Trennvorrichtung 125 befördert. Das VOC-beladene Absorptionsmittel 121 wird über eine dritte Verbindungsleitung 127 vom unteren Ende 111 der Absorptionsvorrichtung 109 mittels einer Pumpe (nicht gezeigt) zu einer Wärmetauschervorrichtung 129 gepumpt und in dieser auf 50 - 70°C erwärmt. Anschliessend wird das VOC-beladene Absorptionsmittel 121 weiter zu einem oberen Ende 133 einer Desorptionsvorrichtung 135 gepumpt und der Desorptionsvorrichtung 135 zugeführt. In der Trennvorrichtung 125 wird das methanhaltige, VOC-reduzierte Gasgemisch 119 in einen druck-reduzierten, mit CO₂ angereichten Gasstrom 137 (Druck -0.5 bis +0.5 bar (g)) und einen isobaren methanangereicherten Gasstrom 139 (Druck 14 - 18 bar (g)) aufgetrennt. Der mit CO₂ angereichte Gasstrom 137 wird anschliessend über eine vierte Verbindungsleitung 143 an einem unteren Ende 141 der Desorptionsvorrichtung 135 eingeleitet und steigt zum oberen Ende 133 der Desorptionsvorrichtung 135 auf. Während das flüssige VOC-beladene Absorptionsmittel 121 in Tropfenform vom oberen Ende 133 zum unteren Ende 141 der Desorptionsvorrichtung 135 strömt, kommt es in Kontakt mit dem entgegenströmenden mit CO₂ angereichten Gasstrom 137. Durch die Erwärmung des flüssigen VOC-beladenen Absorptionsmittels 121 werden die gebundenen VOC reversibel gelöst und strömen mit dem mit CO₂ angereichten Gasstrom 137 zum oberen Ende 133 der Desorptionsvorrichtung 135. Dabei entsteht ein aufgereinigtes Absorptionsmittel 145, welches sich am unteren Ende 141 der Desorptionsvorrichtung 135 sammelt. Durch eine fünfte Verbindungsleitung 147 wird das aufgereinigte Absorptionsmittel 145 mittels einer Pumpe (nicht gezeigt) zur Wärmetauschervorrichtung 129 befördert, wo es auf 2 - 10°C gekühlt und anschliessend über die Zufuhrleitung 115 zum oberen Ende 113 der Absorptionsvorrichtung 109 gepumpt wird. Die Wärmetauschervorrichtung 129 kann dabei mehrere separate Wärmetauscher 131, 131', 131" umfassen. Am oberen Ende 133 der Desorptionsvorrichtung 135 wird ein mit CO₂ und VOC angereichter Gasstrom 149 abgeführt und einer regenerativen Nachverbrennungsvorrichtung 151 zugeführt, um die Umweltbelastung des Verfahrens zu reduzieren.

Für die Nutzung methanhaltiger Gase als Erdgasersatz müssen schwefelhaltige Komponenten im Produktgas unter einen Grenzwert von 6 mg/m³ Schwefeläquivalent gesenkt werden. Der Grenzwert ist z.B. in dem Regelwerk G260 des DVGW aufgeführt.

Für andere VOC gelten z.B. Grenzwerte für die Nutzung von Gaspermeationsmembranen. Dort muss eine Gesamt-VOC-Konzentration von 10 ppm unterschritten werden, um beispielweise die Nutzungsbedingungen von Evonik (Hersteller einer Gaspermeationsmembranen) zu erfüllen.

Ein weiterer Grund für Diskussionen um eine Begrenzung von VOC im Biogas sind Fremdgerüche, die durch die VOC verursacht werden können.

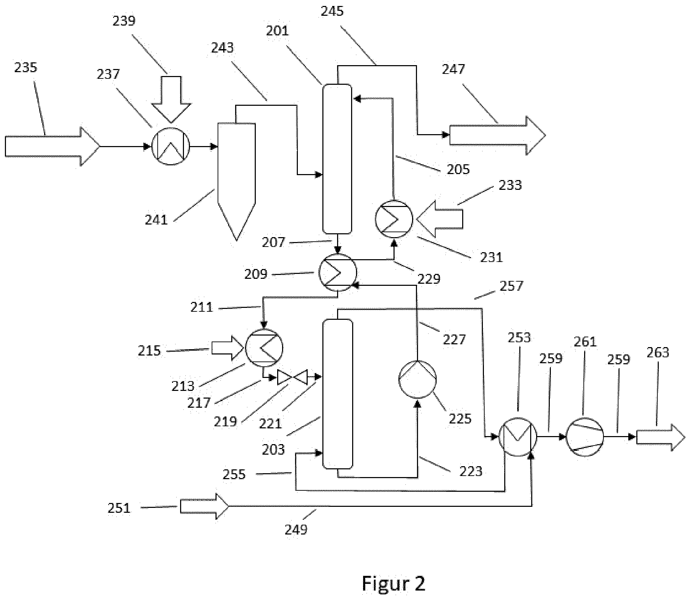

Figur 2 zeigt ein *in silico* Simulationsmodell einer bevorzugten Ausführungsform des erfindungsgemässen Verfahrens. Das Simulationsmodell umfasst eine Absorptionsvorrichtung 201 und eine Desorptionsvorrichtung 203. Das Absorptionsmittel - hier PEG - tritt als Flüssigkeit 205 die Absorptionsvorrichtung 201 ein. Das Absorptionsmittel verlässt, als mit VOC beladene Flüssigkeit 207 die Absorptionsvorrichtung 201 und wird in einem Wärmetauscher 209 erwärmt. Das so erhaltene erwärmte, mit VOC beladene Absorptionsmittel 211 wird vom Wärmetauscher 209 zu einem weiteren Wärmetauscher 213 befördert und dort weiter erwärmt. Dabei wird dem Wärmetauscher 213 externe Wärme 215 zugeführt. Ein stark erwärmtes, mit VOC beladenes Absorptionsmittel 217 verlässt den Wärmetauscher 213 und wird in einer Stellarmatur 219 entspannt. Das erwärmte, entspannte, mit VOC beladene Absorptionsmittel 221 tritt in die Desorptionsvorrichtung 203 ein, wo es die VOC abgibt. Das weitgehend regenerierte, erwärmte, entspannte Absorptionsmittel 223 wird von einer Pumpe 225 komprimiert und als komprimiertes, erwärmtes weitgehend regeneriertes Absorptionsmittel 227 weiter zum Wärmetauscher 209 transportiert. Im Wärmetauscher 209 gibt es einen Teil seiner Wärme an das mit VOC beladene Absorptionsmittel 207 ab. Das kühlere, komprimierte, weitgehend regenerierte Absorptionsmittel 229 wird daraufhin zu einem weiteren Wärmetauscher 231 transportiert und in diesem weiter gekühlt. Dazu wird dem Wärmetauscher 231 externe Kälte 233 zugeführt. Das gekühlte, komprimierte, weitgehend regenerierte Absorptionsmittel 205 tritt wieder in die Absorptionsvorrichtung 201 ein und schliesst so den Absorptionsmittelkreislauf. Ein komprimiertes, zu reinigendes Biogas 235 wird in einem Wärmetauscher 237 mittels externer Kälte 239 gekühlt und anschliessend in einem Kondensatabscheider 241 von Kondensat befreit. Ein resultierendes gekühltes, komprimiertes Biogas 243 wird der Absorptionsvorrichtung 201 zugeführt, wo es mit dem gekühlten, komprimierten, weitgehend regenerierten Absorptionsmittel 205 in Kontakt kommt und dabei seine VOC an das Absorptionsmittel 205 abgibt. Ein gereinigtes Biogas 245 tritt aus der Absorptionsvorrichtung 201 aus und kann anschliessend für weiter Prozesse 247 verwendet werden. Ein Regenerationsgas 249, beispielsweise ein Schwachgas aus der Biogasaufbereitung 251, wird einem Wärmetauscher 253 zugeführt und in diesem erwärmt. Ein erwärmtes Regenerationsgas 255 tritt in die Desorptionsvorrichtung 203 ein und löst in dieser das VOC vom erwärmten, entspannten, mit VOC beladenen Absorptionsmittel 221. Ein mit VOC beladenes Regenerationsgas 257 tritt anschliessend aus der Desorptionsvorrichtung 203 aus und gibt im Wärmetauscher 253 seine Wärme an das Regenerationsgas 249 ab. Ein gekühltes, mit VOC beladenes Regenerationsgas 259 wird mittels eines Sauggebläses 261 zu einer Nachbehandlungseinheit 263 befördert.

In der oben beschriebenen Computersimulation wurde mittels des Henry-Gesetzes die Löslichkeit einer bestimmten VOC Verbindung im Absorptionsmittel, hier PEG simuliert. Dabei wird in einem ersten Schritt die Gleichgewichtsgerade konstruiert, bei welcher sich die Gasphase und die flüssige Phase im Gleichgewicht befinden, die Steigung der Gleichgewichtsgeraden entspricht dem Henry-Koeffizienten der Verbindung bei der jeweiligen Temperatur. In einem zweiten Schritt wird die Bilanzgerade konstruiert, welche sich aus der Massebilanz der VOC Verbindung in der Absorptionsvorrichtung ergibt. Der Startpunkt der Bilanzgeraden liegt dabei bei der VOC Konzentration am oberen Ende der Absorptionsvorrichtung (gereinigtes Biogas 245) und der Konzentration der flüssigen Phase am oberen Ende der Absorptionsvorrichtung (regeneriertes PEG 205). Der Endpunkt der Bilanzgerade ergibt sich aus der Gasphasenkonzentration am unteren Ende der Absorptionsvorrichtung (mit VOC beladenes Biogas 243) und der Konzentration der flüssigen Phase am unteren Ende der Absorptionsvorrichtung (mit VOC beladenes PEG 207). Der Start und der Endpunkt der Bilanzgeraden werden dabei mittels einer Geraden (Bilanzgerade) verbunden.

Dies gilt nur unter der Annahme, dass in der Absorptionsvorrichtung eine konstante Temperatur vorliegt. Bei einem Temperaturgradienten würde sowohl die Bilanzgerade als auch die Gleichgewichtsgerade als Bilanzkurve und Gleichgewichtskurve dargestellt. Zwischen der Bilanzgeraden und der Gleichgewichtsgeraden kann eine Stufenkonstruktion gezeichnet werden. Jede Stufe steht dabei für einen theoretischen Boden der Kolonne. Die Anzahl der Stufen ist ein Mass für die erforderliche Höhe der Absorptionsvorrichtung. Bei einer Absorption liegt die Bilanzgerade stets oberhalb der Gleichgewichtsgeraden. Befindet sich die Bilanzgerade unterhalb der Gleichgewichtsgeraden, dann handelt es sich um eine Desorption.

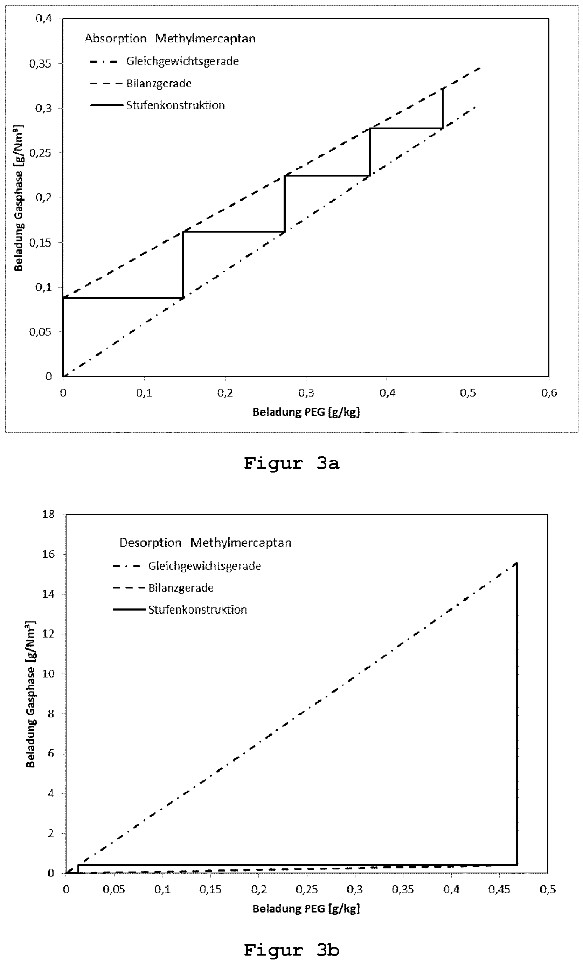

Die Figur 3a zeigt ein analoges Stufendiagramm für die VOC Verbindung Methylmercaptan (CAS 74-93-1) und PEG als Absorptionsmittel in der Absorptionsvorrichtung. Die Bilanzgerade (gestrichelte Linie) ist dabei oberhalb der Gleichgewichtsgeraden (strich-punktierte Linie) angeordnet und dazwischen ist die Stufenkonstruktion (ausgezogene Linie) dargestellt.

Die Figur 3b zeigt ein zum oben beschriebenen analoges Stufendiagramm für die VOC Verbindung Methylmercaptan (CAS 74-93-1) und PEG als Absorptionsmittel in der Desorptionsvorrichtung. Die Gleichgewichtsgerade (strich-punktierte Linie) ist dabei oberhalb der Bilanzgeraden (gestrichelte Linie) angeordnet und die die Stufenkonstruktion (ausgezogene Linie) ist dazwischen dargestellt. Aus der Figur 3a geht hervor, dass eine Stufenkonstruktion für Methylmercaptan nicht sinnvoll ist, da ein grosser Rest von Methylmercaptan im gereinigten Biogas verbleibt, wenn der Strom von Absorptionsmittel zu klein war (im Simulationsmodell). Aus der Figur 3b geht hervor, dass das Absorptionsmittel in der Desorptionsvorrichtung annähernd vollständig von Methylmercaptan regeneriert wird.

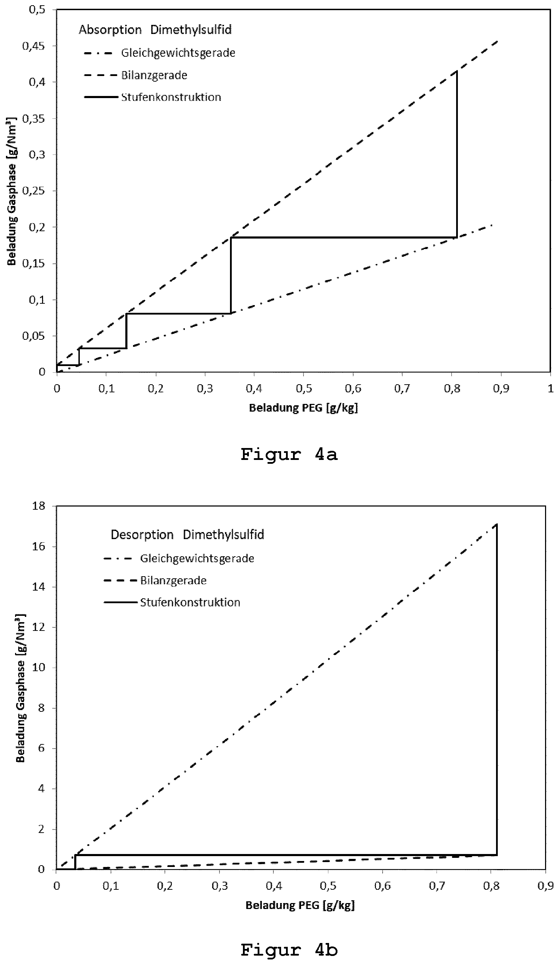

Die Figuren 4a und 4b zeigen analog zu den oben beschriebenen Stufendiagrammen ein Stufendiagramm für die VOC Verbindung Dimethylsulfid (CAS 75-18-3) und PEG als Absorptionsmittel in der Absorptionsvorrichtung (Figur 4a) und in der Desorptionsvorrichtung (Figur 4b). Aus der Figur 4a geht hervor, dass zur Reinigung des Biogases eine Mehrzahl von Stufen nötig sind und dennoch ein Rest von Dimethylsulfid bim Biogas verbleibt. Aus der Figur 4b geht hervor, dass das Absorptionsmittel in der Desorptionsvorrichtung annähernd vollständig von Dimethylsulfid regeneriert wird.

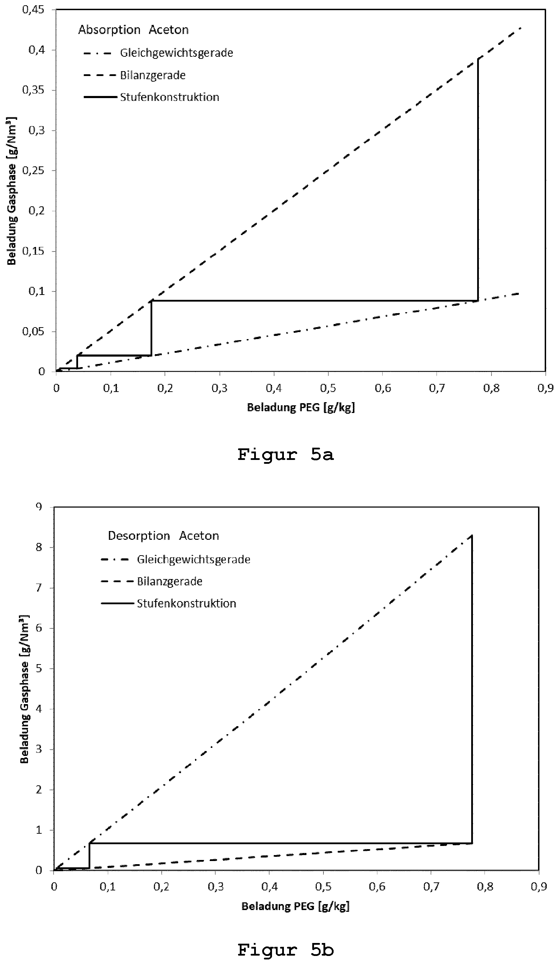

Die Figuren 5a und 5b zeigen analog zu den oben beschrieben Stufendiagrammen ebensolche für die VOC Verbindung Aceton (CAS 67-64-1) und PEG als Absorptionsmittel in der Absorptionsvorrichtung (Figur 5a) und in der Desorptionsvorrichtung (Figur 5b). Aus der Figur 5a geht hervor, dass zur Reinigung des Biogases eine Mehrzahl von Stufen nötig sind und dennoch ein sehr kleiner Rest von Aceton bim Biogas verbleibt. Aus der Figur 5b geht hervor, dass das Absorptionsmittel in der Desorptionsvorrichtung annähernd vollständig von Aceton regeneriert wird.

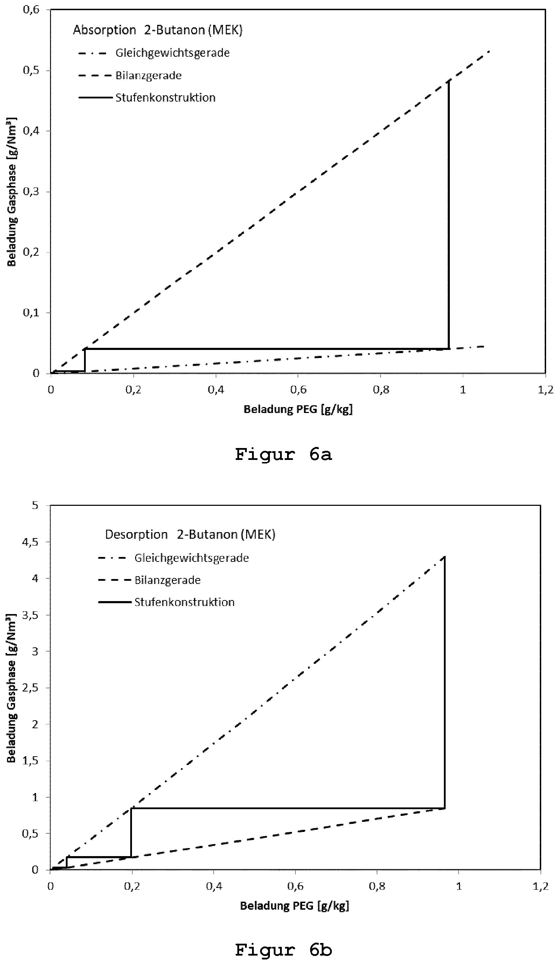

Die Figuren 6a und 6b zeigen analog zu den oben beschriebenen Stufendiagrammen ebensolche für die VOC Verbindung 2-Butanon (CAS 78-93-3) und PEG als Absorptionsmittel in der Absorptionsvorrichtung (Figur 6a) und in der Desorptionsvorrichtung (Figur 6b). Aus der Figur 6a geht hervor, dass zur Reinigung des Biogases nur wenige Stufen nötig sind und kein Rest von 2-Butanon im Biogas verbleibt. Aus der Figur 6b geht hervor, dass das Absorptionsmittel in der Desorptionsvorrichtung mittels einer Mehrzahl von Stufen von 2-Butanon regeneriert wird, jedoch verbleibt ein kleiner Teil von 2-Butanon im regenerierten Absorptionsmittel.

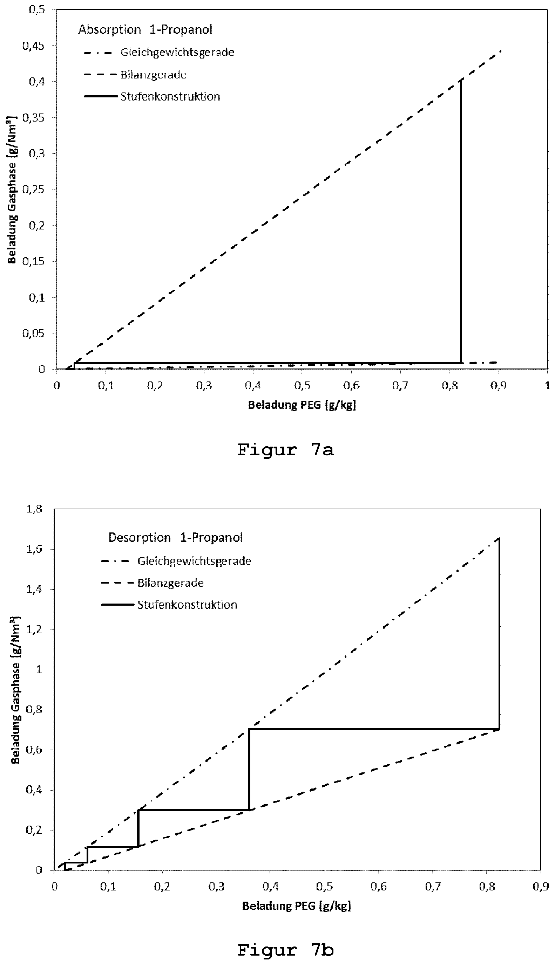

Die Figuren 7a und 7b zeigen analog zu den oben beschriebenen Diagrammen Stufendiagramme für die VOC Verbindung 1-Propanol (CAS 71-23-8) und PEG als Absorptionsmittel in der Absorptionsvorrichtung (Figur 7a) und in der Desorptionsvorrichtung (Figur 7b). Aus der Figur 7a geht hervor, dass zur Reinigung des Biogases nur wenige Stufen nötig sind und ein sehr kleiner Rest von 1-Propanol im Biogas verbleibt. Aus der Figur 7b geht hervor, dass trotz einer Mehrzahl von Stufen das Absorptionsmittel in der Desorptionsvorrichtung nicht vollständig von 1-Propanol regeneriert wird.

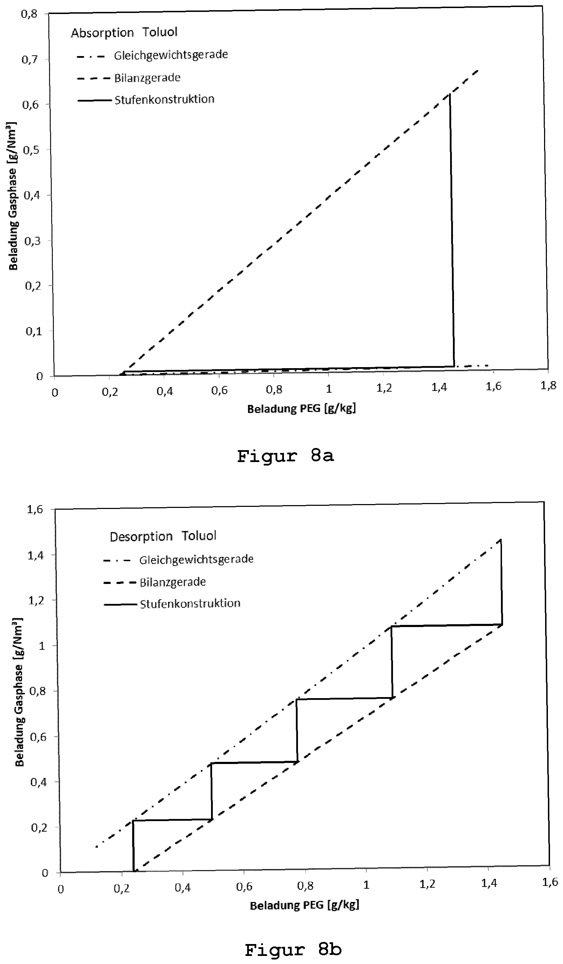

Die Figuren 8a und 8b zeigen zu den oben beschriebenen Diagrammen analog erstellte Stufendiagramme für die VOC Verbindung Toluol (CAS 108-88-3) und PEG als Absorptionsmittel in der Absorptionsvorrichtung (Figur 8a) und in der Desorptionsvorrichtung (Figur 8b). Aus der Figur 8a geht hervor, dass zur Reinigung des Biogases nur wenige Stufen nötig sind, jedoch ein Rest von Toluol im Biogas verbleibt, da dieses unvollständig regeneriert wurde. Aus der Figur 8b geht hervor, dass trotz einer Mehrzahl von Stufen das Absorptionsmittel in der Desorptionsvorrichtung nicht vollständig von Toluol regeneriert wird. Da die Bilanzgerade und die Gleichgewichtsgerade parallel verlaufen, ist eine vollständige Regeneration nicht möglich.

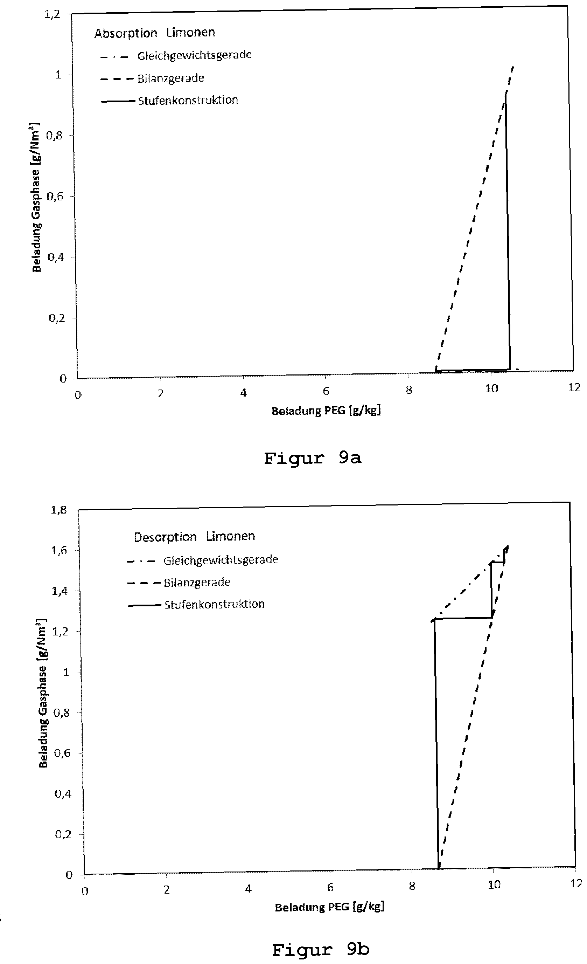

Die Figuren 9a und 9b zeigen analog erstellte Stufendiagramme für die VOC Verbindung Limonen (CAS 7705-14-8) und PEG als Absorptionsmittel in der Absorptionsvorrichtung (Figur 9a) und in der Desorptionsvorrichtung (Figur 9b). Aus der Figur 9a geht hervor, dass zur Reinigung des Biogases nur wenige Stufen nötig sind, jedoch ein Rest von Limonen im Biogas verbleibt, da dieses unvollständig regeneriert wurde. Aus der Figur 9b geht hervor, dass trotz einer Mehrzahl von Stufen das Absorptionsmittel in der Desorptionsvorrichtung nicht vollständig von Limonen regeneriert wird, da der Stoffstrom des Absorptionsmittel zu hoch ist (im Simulationsmodell).

Auf Basis der Simulation gemäss den Figuren 2 bis 9 kann festgestellt werden, dass VOC mit einem Siedepunkt zwischen 35°C und 100°C in der Absorptionsvorrichtung annähernd vollständig aus dem Biogas und in der Desorptionsvorrichtung annähernd vollständig aus dem Absorptionsmittel gelöst werden können. VOC mit einem höheren Siedepunkt als 100 C werden nahezu vollständig aus dem Biogas entfernt. Die Regeneration des Absorptionsmittels ist jedoch unvollständig. VOC mit einem Siedepunkt von weniger als 35°C werden unvollständig aus dem Biogas entfernt. Die Gasbestandteile CO₂ und Methan verbleiben fast vollständig in der Gasphase.

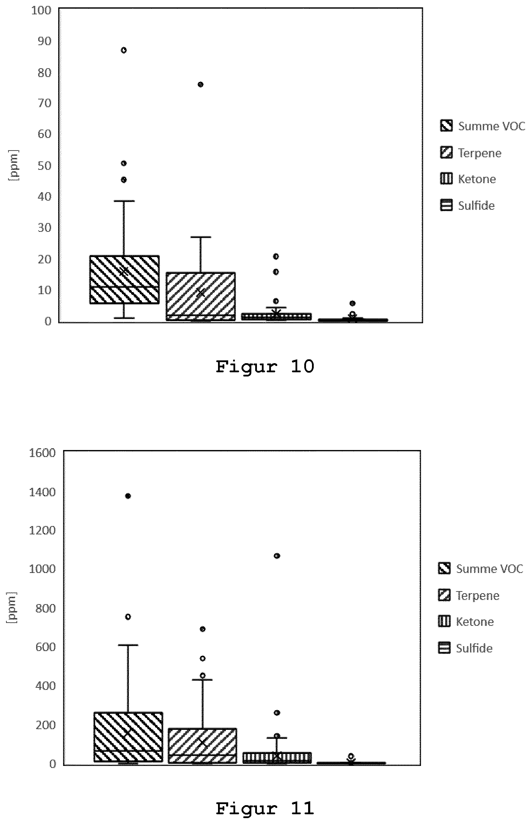

Figur 10 zeigt ein Diagramm basierend auf 48 Messungen von VOC in Biogasproben, wobei das Biogas aus nachwachsendem Rohstoff (NaWaRo) hergestellt wurde. Die Konzentration von VOC im Biogas liegt dabei zwischen 5 bis 20 ppm. Vereinzelte Werte liegen höher. Die VOC in Biogas aus nachwachsenden Rohstoffen bereitet in der weiteren Verarbeitung keine Probleme.

Figur 11 zeigt ein Diagramm basierend auf 138 Messungen von VOC in Biogasproben, wobei das Biogas aus Abfall hergestellt wurde. Die Konzentration von VOC im Biogas liegt dabei zwischen 10 bis 250 ppm. In zahlreichen Fällen wurden auch höhere Konzentrationen erreicht. Die VOC im Biogas aus Abfall bereiten in der weiteren Verarbeitung häufig Probleme, daher ist eine gezielte Entfernung der VOC notwendig.

## Patentansprüche

1. Verfahren zur Aufbereitung von methanhaltigem Gas umfassend die Schritte:
a) Bereitstellen eines methanhaltigen Gasgemisches (103) umfassend CO₂ sowie mindestens eine Verbindung aus der Gruppe der flüchtigen organischen Verbindungen (VOC),
wobei die mindestens eine VOC-Verbindung ausgewählt ist aus der Gruppe bestehend aus Ketonen, schwefelhaltigen Kohlenwasserstoffen und Terpenen,
wobei die Konzentration der VOC-Verbindung im Gasgemisch 10 - 10'000 ppm beträgt;
b) Komprimieren und Kühlen des methanhaltigen Gasgemisches (103) aus Schritt a);
c) Zuführen des komprimierten, gekühlten methanhaltigen Gasgemisches zu einer Absorptionsvorrichtung (109), wobei die Absorptionsvorrichtung (109) ein flüssiges VOC-reversibel-absorbierendes Absorptionsmittel (117) umfasst;
d) Absorption eines Teils der VOC-Verbindung durch das Absorptionsmittel (117), wodurch ein methanhaltiges, VOC-reduziertes Gasgemisch (119) und ein VOC-beladenes Absorptionsmittel (121) erhalten wird;
e) Zuführen des VOC-beladenen Absorptionsmittels (121) aus der Absorptionsvorrichtung (109) zu einer Desorptionsvorrichtung (135);
f) Zuführen des methanhaltigen, VOC-reduzierten Gasgemisches (119) aus der Absorptionsvorrichtung (109) zu einer Trennvorrichtung (125), in welcher das methanhaltige, VOC-reduzierte Gasgemisch (119) in einen druck-reduzierten, mit CO₂ angereichten Gasstrom (137) und einen isobaren, methanangereicherten Gasstrom (139) aufgetrennt wird;
g) Zuführen eines Regenerationsgasstroms (138) zur Desorptionsvorrichtung (135) zur Regeneration des VOC-beladenen Absorptionsmittels (121), wobei ein Abgasstrom (149) enthaltend die VOC-Verbindung sowie ein zumindest teilweise regeneriertes Absorptionsmittel (145) erhalten wird;
h) Abführen des Abgasstroms (149) aus der Desorptionsvorrichtung (135) und Rückführen des zumindest teilweise regenerierten Absorptionsmittels (145) aus der Desorptionsvorrichtung (135) in die Absorptionsvorrichtung (109).

2. Verfahren gemäss Anspruch 1, **dadurch gekennzeichnet, dass** mindestens die Schritte c) bis h) kontinuierlich erfolgen.

3. Verfahren gemäss einem der Ansprüche 1 oder 2, **dadurch gekennzeichnet, dass** in Schritt g) zumindest ein Teil des mit CO₂ angereicherten Gasstroms (137) aus Schritt f) als Regenerationsgasstrom (138) verwendet wird, wodurch der Abgasstrom (149) neben der VOC-Verbindung ferner CO₂ enthält.

4. Verfahren einem der Ansprüche 1 bis 3, **dadurch gekennzeichnet, dass** in Schritt c) in der Absorptionsvorrichtung 2 bis 10 Liter Absorptionsmittel pro Bm³ methanhaltiges Gasgemisch aus Schritt b) verwendet werden.

5. Verfahren gemäss einem der Ansprüche 1 bis 4, **dadurch gekennzeichnet, dass** in Schritt g) in der Desorptionsvorrichtung 1 bis 3 Liter VOC beladenes Absorptionsmittel aus Schritt d) mit 1 Bm³ CO₂ angereichtes Gas aus Schritt f) regeneriert werden.

6. Verfahren gemäss einem der Ansprüche 1 bis 5, **dadurch gekennzeichnet, dass** das VOC-absorbierende Absorptionsmittel (117, 145) einen Siedepunkt von mehr als 250°C bei 1013,25 mbar aufweist und eine Verbindung ausgewählt aus der Gruppe bestehend aus Polyethylenglycol (PEG), Mineralöl, Estern oder Kombinationen davon, bevorzugt Polyethylenglycol, umfasst.

7. Verfahren gemäss einem der Ansprüche 1 bis 6, **dadurch gekennzeichnet, dass** das VOC-absorbierende Absorptionsmittel (117, 145) eine Verbindung gemäss der Formel (I) umfasst:
I)
R₁-O-(CH₂CH₂O)ₙ-R₂,
wobei n = 3 bis 11 und
R₁ und R₂ unabhängig voneinander ausgewählte lineare C₁ - C₁₀ Alkyle sind.

8. Verfahren gemäss einem der Ansprüche 1 bis 7, **dadurch gekennzeichnet, dass** die VOC-Verbindung einen Dampfdruck von mindestens 0,1 mbar bei 20 °C und/oder einen Siedepunkt von höchstens 240°C bei 1013,25 mbar aufweist.

9. Verfahren gemäss einem der Ansprüche 1 bis 8, **dadurch gekennzeichnet, dass** die mindestens eine VOC-Verbindung ausgewählt ist aus der Gruppe bestehend aus Aceton, 2-Butanon, 3-Methyl-2-butanon, 2-Pentanon, 3-Pentanon, 3,3-Dimethyl-2-butanon, 2-Methyl-3-pentanon, 4-Methyl-2-pentanon, 3-Methyl-2-pentanon, 3-Hexanon, 2-Hexanon, 5-Methyl-3-hexanon, 3-Methyl-2-hexanon, 2-Heptanon, 4-Octanon, 3-Octanon, 2-Octanon, 2,9-Decandion, α-Thujen, α-Pinen, Camphen, Sabinen, β-Pinen, Myrcen, 3-Caren, Thujanon, Thujopsen, Thymol, α-Terpinen, β-Caryophyllen, 1,4-Cineol, Eucalyptol, Fenchon, γ-Terpinen, Terpinolen, Limonen, Tricyclen, Linalool, Menthon, Nopinon, p-Menthan-2-on, p-Menthan-2-ol, Campher, Carvomenthon, 3,3-Dimethyl-2-bornanon, Carbonylsulfid, Methylmercaptan, Ethylmercaptan, Dimethylsulfid, Kohlenstoffdisulfid, 2-Propanthiol, 2-Methyl-2-propanthiol, 1-Propanthiol, Thiophen, 2-Butanthiol, Isobutylmercaptan, Methyl-Allyl-Sulfid, Methylpropylsulfid, Butanthiol, Dimethyldisulfid, 2-Methylthiophen, 3-Methylthiophen, Tetrahydrothiophen, 1-Pentanthiol, Thiophenol, Dimethyltrisulfid, Diisopropyldisulfid, Dimethyltetrasulfid, Methylpropyldisulfid und Methylisopropyldisulfid.

10. Verfahren gemäss einem der Ansprüche 1 bis 9, **dadurch gekennzeichnet, dass** die Trennvorrichtung (125) eine Membran umfasst, welche das methanhaltige, VOC-reduzierte Gasgemisch (119) in ein CO₂-angereichtes Permeat (137) und ein methanangereichertes Retentat (139) auftrennt.

11. Verfahren gemäss einem der Ansprüche 1 bis 10, **dadurch gekennzeichnet, dass** das methanhaltige Gasgemisch (103) in Schritt b) auf 6 bis 24 bar (g), bevorzugt 10 bis 20 bar (g), und besonders bevorzugt auf 14 bis 18 bar (g), komprimiert wird.

12. Verfahren gemäss einem der Ansprüche 1 bis 11, **dadurch gekennzeichnet, dass** das methanhaltige Gasgemisch (103) in Schritt b) auf 0°C bis 20°C, bevorzugt auf 2°C bis 10°C, gekühlt wird.

13. Verfahren gemäss einem der Ansprüche 1 bis 12, **dadurch gekennzeichnet, dass** das VOC-beladene Absorptionsmittel (121) aus Schritt d) vor dem Transport in die Desorptionsvorrichtung (135) erwärmt wird, bevorzugt auf 30°C bis 90°C, besonders bevorzugt auf 50°C bis 70°C.

14. Verfahren gemäss einem der Ansprüche 1 bis 13, **dadurch gekennzeichnet, dass** das regenerierte Absorptionsmittel (145) aus Schritt g) vor seiner Rückführung in die Absorptionsvorrichtung (109) gekühlt wird, bevorzugt auf 0°C bis 20°C, besonders bevorzugt auf 2°C bis 10°C.

15. Vorrichtung (100) zur Aufbereitung von methanhaltigem Gas (103) gemäss dem Verfahren nach einem der Ansprüche 1 bis 14, umfassend
eine Gasquelle (101),
eine Kühlvorrichtung (107),
einen Kompressor (105),
eine Absorptionsvorrichtung (109) mit einem oberen Ende (113) und einem unteren Ende (111),
eine Desorptionsvorrichtung (135) mit einem oberen Ende (133) und einem unteren Ende (141),
eine Trennvorrichtung (125),
eine erste Verbindungsleitung (115, 147), welche das untere Ende (141) der Desorptionsvorrichtung (135) mit dem oberen Ende (113) der Absorptionsvorrichtung (109) verbindet,
eine zweite Verbindungsleitung (127), welche das untere Ende (111) der Absorptionsvorrichtung (109) mit dem oberen Ende (133) der Desorptionsvorrichtung (135) verbindet,
eine dritte Verbindungsleitung (123), welche das obere Ende der Absorptionsvorrichtung (109) mit der Trennvorrichtung (125) verbindet, sowie eine vierte Verbindungsleitung (143), welche die Trennvorrichtung (125) mit dem unteren Ende (141) der Desorptionsvorrichtung (135) verbindet.
